# EUROPEAN PATENT SPECIFICATION

(11) **EP 4 161 881 B1**
(45) Date of publication and mention of the grant of the patent: **29.04.2026**
(21) Application number: 21737148.3
(22) Date of filing: 08.06.2021
(51) Int. Cl.: B01F 21/00

(54) **SALTS DOSING APPARATUS FOR A HYDRAULIC SYSTEM**
VORRICHTUNG ZUR DOSIERUNG VON SALZEN FÜR EIN HYDRAULISCHES SYSTEM
APPAREIL DE DOSAGE DE SELS POUR SYSTÈME HYDRAULIQUE

(30) Priority: 08.06.2020 IT 202000013558; 09.04.2021 IT 202100008912
(43) Date of publication of application: 12.04.2023
(73) Proprietor: HCE Srl, 25060 Cellatica (BS) (IT)
(72) Inventor: INGLESE, Enrico, 25128 Brescia BS (IT)
(74) Representative: De Sandre, Emanuele
(86) International application number: PCT/IB2021/055017
(87) International publication number: WO 2021/250559

(56) References cited:
- WO-A2-2020/016851
- US-A- 4 347 224
- US-B1- 6 270 664
- US-B1- 6 325 925

## Description

### TECHNICAL SECTOR

The present invention is related to salt dosing apparatus comprising a cartridge member for an apparatus for dosing salts, in particular polyphosphates, for a hydraulic system and, especially, for a heating system.

### PRIOR ART

Nowadays in the sector of heating systems it is known to connect a polyphosphates dosing apparatus to a heating system.

This apparatus has the function of gradually releasing into the water flowing through the system sodium and potassium phosphates which prevent the formation of calcium carbonate deposits, commonly called limescale, inside the pipes of the system and/or apparatus associated with them, such as for example inside a water heating boiler.

A polyphosphates dosing apparatus known nowadays comprises a mouthpiece or connection member provided with two or three connectors designed to be connected, by means of a ring nut, to a corresponding number of pipes of the system.

In the version with three connectors a first connector and second connector of said connectors operate in a functionally alternative manner and are arranged with their development axis at 90° with respect to each other.

The axis of the first connector is aligned with the axis of the third connector, while the axis of the second connector is arranged at 90° with respect to the axis of the third connector, so as to allow an in-line connection or elbow connection of the dosing apparatus to the system.

The mouthpiece has, connected thereto, by means of a retaining ring nut, a cup which, in cooperation with the mouthpiece, delimits an internal compartment inside which, during use, polyphosphate, i.e. sodium phosphate or potassium phosphate, elements are housed.

These polyphosphate elements are contained inside a chamber which defines with the wall of the cup a cavity which is in fluid communication with the first and second connectors and the channel is in fluid communication with the third connector, or vice versa, so that the water which during use enters the distribution apparatus from the first or second connector, in order to reach the third connector and exit, must pass over the polyphosphate elements.

In particular, the tubular elastic element has one end connected to a tubular collar which extends from the mouthpiece and which is in hydraulic communication either with the first and the second connector or with the third connector.

The greater the flowrate of the water which passes over the polyphosphate elements, the greater is the diffusion of the latter inside the system.

This known polyphosphate dosing device may be improved since it has proved to be inefficient in performing precise dosing according to the actual working condition of the system in which it is installed. Some relevant prior art documents are US 6 270 664 B1, US 6 325 925 B1, US 4 347 224 A and WO 202/016851 A2.

### SUMMARY

The problem underlying the present invention is that of improving the dosing of polyphosphates in a hydraulic system and especially in a heating system.

The task of cartridge member for a salts dosing apparatus for a hydraulic system according to the present invention is therefore that of solving this problem.

In connection with this task, an object of the invention is to propose a salts dosing apparatus for a hydraulic system which is able to dose salts, in a liquid flow passing through it, in a manner proportional to the rate of said flow

Another object of the invention is to provide a salts dosing apparatus for a hydraulic system which allows dosing in a manner proportional to the flowrate of a fluid which crosses it automatically, namely without the need for adjustments by an operator.

A further object of the invention is to propose a salts dosing apparatus for a hydraulic system which also allows the removal of impurities from the water flow which crosses it.

This task, as well as these and other objects which will become clearer below are achieved by a salts dosing apparatus with a cartridge member for a salts dosing apparatus for a hydraulic system according to the attached claim 1.

Detailed characteristic features of a cartridge member for a salts dosing apparatus for a hydraulic system according to the invention are described in the dependent claims.

Further characteristic features and advantages of the invention will emerge more clearly from the description of a preferred, but non-exclusive embodiment of a salts dosing apparatus for a hydraulic system, according to the invention, illustrated in an embodiment thereof provided solely by way of a non-limiting example in the attached sets of drawings listed below.

### BRIEF DESCRIPTION OF THE DRAWINGS

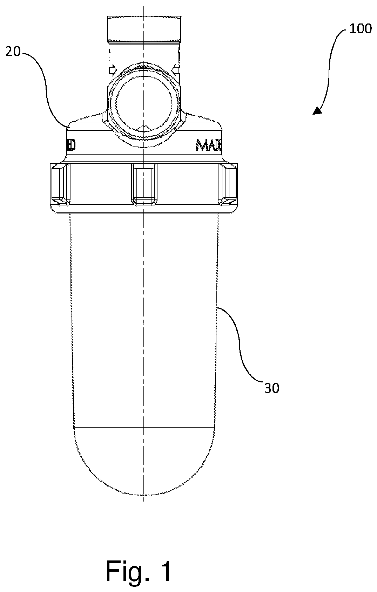

Figure 1 shows a side view of a salts dosing apparatus according to the present invention.

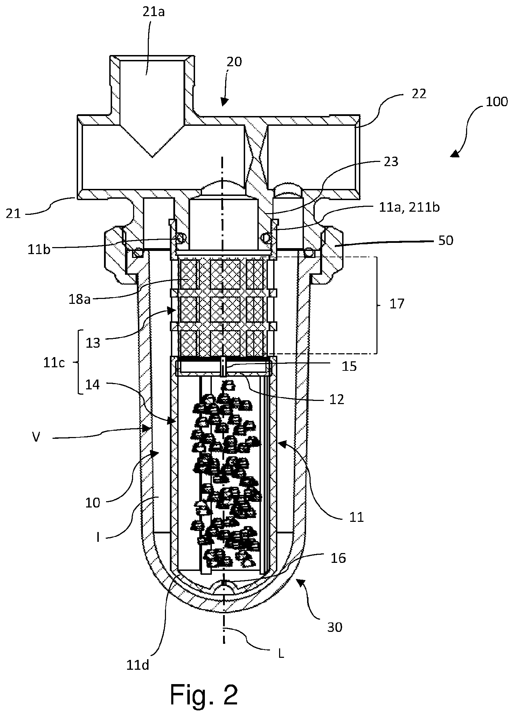

Figure 2 shows a cross-sectional view of a salts dosing apparatus comprising a cartridge member according to an embodiment of the present invention.

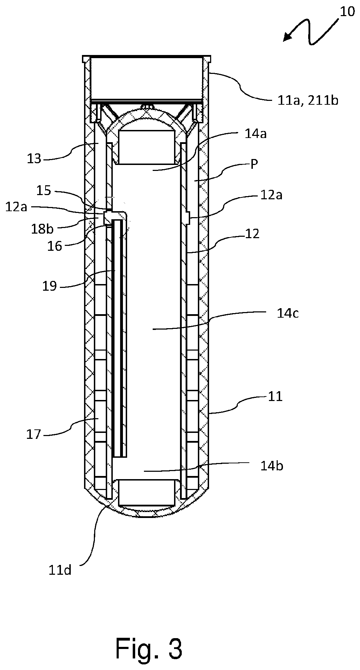

Figure 3 shows a cross-sectional view of a cartridge member according to an embodiment of the present invention.
Figures 4 and 5 show a schematic cross-sectioned side view of a salts dosing apparatus according to the present invention.
Figure 6 shows an exploded, schematic, cross-sectioned side view of a cartridge member of the dosing apparatus according to Figures 4 and 5.
Figure 7 shows a partial, schematic, cross-sectioned side view of a variation of the dosing apparatus according to Figures 4 and 5.
Figures 8 and 9 show possible variants of a component of the cartridge member according to Figure 6.
Figure 10 shows a schematic cross-sectioned side view of a variant of a dosing apparatus according to the present invention.

### DETAILED DESCRIPTION

With particular reference to the said figures, 100 denotes overall an apparatus for dosing salts, preferably sodium and potassium phosphates which are able to prevent the formation of calcium carbonate deposits inside the pipes of the system.

The dosing system 100 comprises a connection member 20 configured to connect the dosing apparatus 100 to a hydraulic system, in particular to a heating system.

The connection member 20 comprises at least one first connector 21 and at least one second connector 22, in addition to a coupling collar 23 which is in fluid communication with the at least one first connector 21 or with the at least one second connector 22.

The coupling collar 23 is provided towards the inside of the dosing apparatus 100. The connection member 20 may also comprise a third connector 21a, which is arranged preferably perpendicular to said first connector 21 or to said second connector 22. In other words, the axis of one connector, for example of the first connector 21, may be aligned with the axis of the second connector 22, while the axis of the third connector 21a may be transverse, for example arranged at 90°, with respect to the axis of the first connector 21 and the second connector 22, so as to allow an in-line connection or elbow connection of the dosing apparatus 100 with the system.

The first connector 21, the second connector 22 and the third connector 21a may be arranged at an angular interval of 90°, so as to allow an in-line connection or, alternatively, an elbow connection of the dosing apparatus 100 with the hydraulic system.

The first connector 21, the third connector 21a and/or the second connector 22 may be provided with a faucet 40 for intercepting them so as to regulate or prevent the flow of fluid from the system through the dosing apparatus 100.

Each connector 21, 21a, 22 is configured to be connected, for example by means of a ring nut, to a pipe of the system.

The first connector 21, the third connector 21a and/or the second connector 22 may be provided with a faucet 40 for intercepting them so as to regulate or prevent the flow of fluid from the system through the dosing apparatus 100.

The dosing apparatus 100 further comprises a container member 30, for example cup-shaped, having preferably a substantially conical or cylindrical development and able to be coupled with the connection member 20 so as to delimit, together with the said connection member 20, an internal compartment V into which the coupling collar 23 faces. The container member 30 may be connected to the connection member 20 for example by means of a ring nut element 50 which can be tightened together with the connection member 20 so as to retain a flange 31 of the container member 30 together with the connection member.

The dosing apparatus 100 further comprises a cartridge member 10, 210 which is preferably housed inside the internal compartment V. More specifically, the cartridge member 10, 210 comprises a - preferably tubular - external wall 11 which delimits inside it an operating chamber 11c, 211a. The external wall 11 extends from a connection portion of the said external wall 11, where this connection portion is configured to be coupled with the coupling collar 23. In this way the operating chamber 11c is placed in fluid communication with the coupling collar 23.

In particular, the external wall 11 may also comprise a top end 211b or a connection portion 11a, which are configured to be coupled with the coupling collar 23 so as to place the operating chamber 11c, 211a in fluid communication with the said coupling collar 23, for example by means of at least one operating opening 211a, and therefore with the first connector 21.

Preferably, the coupling collar 23 and the external wall 11, more specifically the top end 211b thereof, or connection portion 11a, are configured to be coupled together in a leak-tight form-fitting manner.

At least one gasket 11b may be arranged between the coupling collar 23 and the external wall 11 so as to ensure the leak-tight seal.

Consequently, a fluid which flows between the first and second connectors 21, 22 may flow into the operating chamber 11c, 211a of the cartridge member 10, 210.

The external wall 11 is also configured to be contained inside the internal compartment V of the dosing apparatus 100 and to define, together with the container member 30 and/or with the connection member 22, a cavity (I) outside the external wall 11. More specifically, this cavity I is arranged between the external wall 11 of the cartridge member 10, 210 and a wall of the container member 30. Preferably, the external wall 11 is mainly cylindrical and is coaxial with respect to the container member 30 so as to define, together with said container member 30, an annular cavity I around the external wall 11.

The connection portion 11a, or top end 211b, may be shaped so that it can be coupled together with the coupling collar 23 of a conventional dosing apparatus, so as to be able to replace, with the cartridge member 10, the tubular elastic element which is normally provided according to the prior art described above. In this way, the cartridge member 10, 210 may be able to convert a conventional apparatus into a dosing apparatus according to the present invention in a simple and rapid manner without requirement adaptation of the conventional dosing apparatus.

Clearly, the cartridge member 10, 210 according to the present invention may be produced in the form of a plurality of models which differ from each other in terms of shape and size of the cartridge member 10 itself and/or the connection portion 11a so as to be adaptable to conventional dosing apparatus.

The external wall 11 has a main passage section 17 which can be crossed by a liquid, for example a section which is perforated or liquid-permeable, so as to place the operating chamber 11c, 211a in fluid communication with the cavity 1. In this way, a fluid entering into said cartridge member 10, 210 may flow outside the external wall 11, in particular into the cavity I, through the main passage section 17.

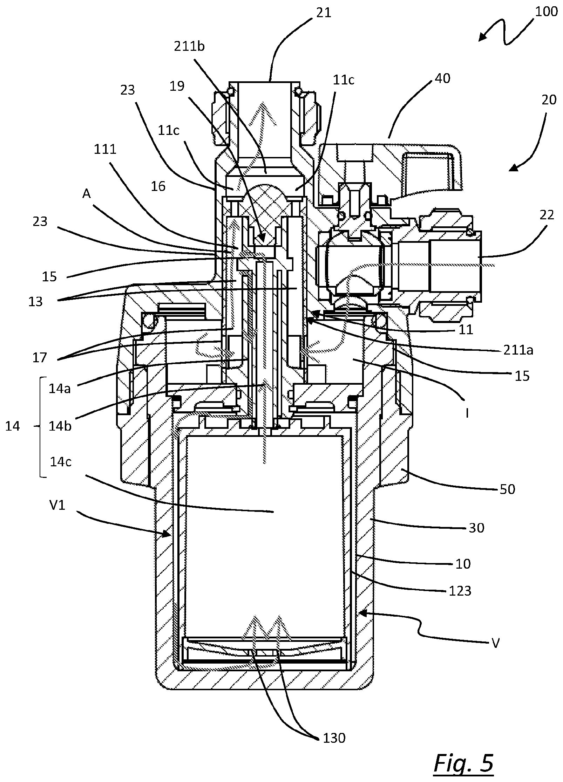

The container member 30 is configured so that the second connector 22 is in fluid communication with the internal compartment V and, in particular, with the cavity I. Consequently, a fluid which flows between the first connector 21 and the second connector 22, crossing the cartridge member 10, 210, may flow through the operating chamber 11c, 211a, accessing the latter from the main passage section 17 and exiting the operating chamber 11c, 211a, for example through the operating openings 211c, as for example shown in Figure 5, or vice versa, depending on the direction of flow of the liquid inside the system to which the dosing device 100 is connected, during operation. In greater detail, a fluid entering into the cartridge member 210 may flow outside the external wall 11, in particular into the cavity I, accessing from the second connector 22 and then accessing the operating chamber 11c, 211a via the main passage section 17 and flowing out from the latter, for example through the at least one operating opening 211c, towards the first connector 21.

Preferably moreover, the cartridge member 10, 210 comprises a filter 18a which engages this main passage section 17 in order to retain particles transported by a liquid which crosses the said section. Preferably, this filter 18a is a mesh filter, preferably metal filter, which is situated along said main passage section 17.

In particular, the external wall 11 may be mainly cylindrical and the main passage section 17 may be a portion of said external wall 11 which is distal with respect to the top end 221b or connection portion 11a and which has a plurality of openings which extend circumferentially around said external wall 11 and opposite which the filter 18a may be arranged. Depending on the particular implementation requirements of the present invention, the number, size and position of the openings in the main passage section 17 may vary. For example, for lower liquid flowrates, it is possible to provide a main passage section 17 which has a series of openings which extend circumferentially around the external wall 11, while, for higher flowrates, it is possible to provide a main passage section 17 which has a plurality of series of openings which extend circumferentially around the external wall 11.

The cartridge member 10, 210 further comprises a separation wall 12, connected to the external wall 11 so as to divide the operating chamber 11c, 211a into two further chambers or regions. In particular, the separation wall 123 divides the operating chamber 11c into a first chamber 13, preferably in fluid communication with the cavity I via the main passage section 17, and into a second chamber 14.

The second chamber 14, more specifically, may be configured to contain salts to be dosed and released into the system.

Furthermore, the separation wall 12 has at least a first passage section 15 which places the first chamber 13 in fluid communication with the said section chamber 14. In this way, the separation wall 12 divides the operating chamber 11c of the cartridge member 10, 210 into a first chamber and second chamber, 13 and 14 respectively, and has a first passage section 15 so that these chambers 13 and 14 are in fluid communication.

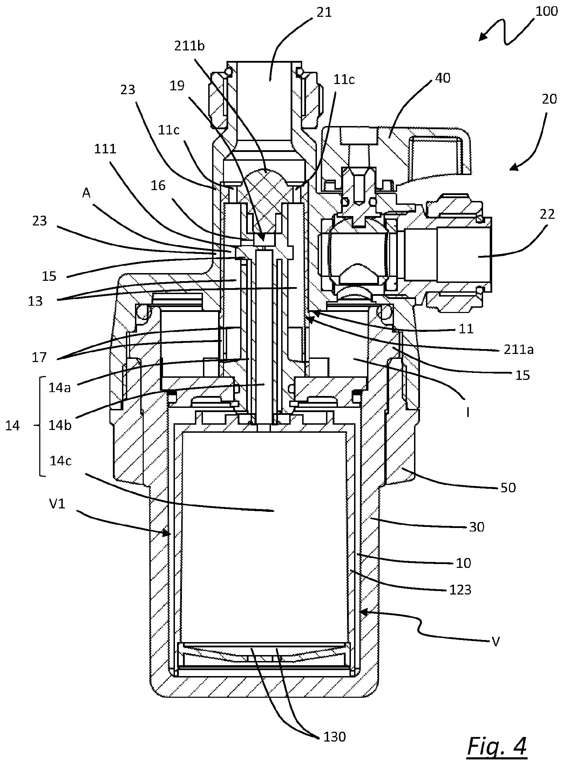

With particular reference to the embodiments shown in Figures 4 to 10, the first passage section may place the first chamber 13 in fluid communication with the first region 214a of the second chamber 14.

The cartridge member 10 furthermore has a second passage section 16, alternatively provided in the separation wall 12 so as to place the second chamber 14 in fluid communication with the first chamber 13 or in the external wall 11 so as to place the second chamber 14 in fluid communication with the cavity I.

The cartridge member 10 also comprises pressure-reducing means 18a, 18b which are configured to induce a pressure drop in the liquid which crosses them. The positioning of these press-reducing means 18a, 18b inside the cartridge member 10 may vary depending on the positioning of the second passage section 16.

Preferably moreover, the pressure-reducing means 18a, 18b 110 may comprise a filter 18a configured to retain particles conveyed by a liquid which crosses it. In combination or alternatively, the pressure-reducing means 18a, 18b, 110 may comprise restriction section 18b which has a protuberance 12a projecting from a wall of the cartridge member 10.

In particular, according to a first embodiment of the cartridge member 10 of the present invention, the second passage section 16 is arranged in the external wall 11 so as to place the second chamber 14 containing the salts in fluid communication with the cavity I.

More specifically, according to this embodiment, the external wall 11 of the cartridge member 10 has an end portion 11d which is distal with respect to its connection portion 11a. In particular, the external wall 11 extends along a direction of development L from the connection portion 11a to the end portion 11d. The end portion 11d of the external wall 11 is designed to face a bottom of the container member 30 when the cartridge member 10 and container member 30 itself are coupled with the connection member 20. According to this embodiment, moreover, the second passage section 16 is situated in this end portion 11d. Consequently, the second chamber 14 which, during use, contains the salts to be dosed in the system, is arranged distal with respect to a connection portion 11a of the external wall 11 or directed towards a bottom of the container member 30. Preferably, moreover, the separation wall 12 extends transversely with respect to the development direction L. In particular, the separation wall 12 is arranged between the distal end portion 11d of the external wall 11 and the connection portion 11a of the same external wall 11.

Moreover, according to this embodiment, the pressure-reducing means 18a, 18b may comprise a filter 18a. In combination with or instead of the filter 18a, the pressure-reducing means may comprise a restriction section which has at least one protuberance 12a which projects from the external wall 11 towards the outside of said external wall 11, and/or vice versa, so as to form a restriction in the cavity I when the cartridge member 10 is incorporated in the dosing apparatus 100.

In this way, along the development direction L, the cartridge member 10 has in succession the first chamber 13 with the main passage section 17 engaged by the pressure-reducing means 18a, 16b, the separation wall 12 and the second chamber 14. Consequently, a fluid fraction which flows inside said cartridge member 10 may exit the first chamber 13 via the main passage section 17 towards the cavity I, crossing the pressure-reducing means 18a, 18b. The latter generate a pressure difference in the fluid which crosses them such as to cause a fluid fraction to pass inside the second chamber 14 containing the salts through the first passage section 15. This fluid fraction which flows inside the second chamber may then flow into the cavity I through the second passage section 16. Consequently, the fluid fraction which flows inside the second chamber 14 is hydraulically in parallel with the fluid fraction which crosses the main passage section 17. Moreover, the fluid fraction which flows inside the second chamber 14 is directly proportional to the flowrate of the fluid which flows between the first and second connectors 21, 22. In this way it is possible to obtain a release of salts proportional to the flowrate of the fluid which flows inside the dosing apparatus 100.

According to a further embodiment, which may differ from the first embodiment in that the second passage section 16 of the cartridge member 10 is defined in the separation wall 12 so as to place the first chamber 13 in fluid communication with the second chamber 14. In particular, therefore, according to this embodiment, the first passage section 15 and the second passage section 16 both place in fluid communication the first chamber 13 and the second chamber 14 of the cartridge member 10.

Furthermore, according to this embodiment, the pressure-reducing means 18a, 18b are located in the first chamber 13, in particular between the first passage section 15 and the second passage section 16.

Preferably, these pressure-reducing means 18a, 18 comprise a restriction section 18b. This restriction section 18b comprises at least one protuberance 12a which projects from the separation wall 12 towards the external wall 11. In combination or alternatively, the restriction section 18b may comprise at least one protuberance which projects from the external wall 11 towards the separation wall 12. In this way a restriction 18b is formed in an interstitial passage P defined between the external wall 11 and the separation wall 12.

In this way, along the interstitial passage P, between the connection portion 11a of the external wall 11 and the main passage section 17, preferably situated distal with respect to the connection portion 11, the following are present in succession: the first passage section 15, the restriction section 18b and the second passage section 16.

Preferably, the separation wall 12 has a tubular portion which extends between the connection portion 11a and the man passage portion 17 of the external wall 11. This tubular section is preferably concentric with respect to the external wall 11, which is preferably cylindrical. Consequently, the interstitial passage P is a zone with a preferably annular cross-section, arranged between the separation wall 12, in particular between the tubular portion of the latter, and the external wall 11 of the cartridge member 10.

Preferably, moreover, according to this embodiment the first passage section 15 opens out in a first region 14a of the second chamber 14 and the separation wall 12 comprises a channel 19 in fluid communication with the second passage section 16. This channel 19 further comprises a mouth opening out into a second region 14b of the second chamber 14. In particular, the first region 14a and the second region 14b of the second chamber 14 are spaced and separated by a containment region 14c configured to contain salts to be dosed. In other words, the second chamber 14 comprises an internal wall which defines a channel 19 in fluid communication with the second passage section 16.

Consequently, therefore, a fluid entering into the cartridge member 10 via the connection portion 11a of the external wall 11 enters into the first chamber 13 and flows inside the interstitial passage P defined between the external wall 11 and the separation wall 12, before encountering the pressure-reducing means 18a, 18b. The latter generate a pressure difference in the fluid which crosses them. Consequently, this causes the entry of a fluid fraction which flows into the interstitial passage P inside the second chamber 14, in particular in the first region 14a of the first chamber 14. This fluid fraction flows parallel to the fluid fraction which crosses the pressure-reducing means until it reaches the containment section 14c of the first chamber 14 and then the second region 14b of the second chamber 14. At this point, the fluid fraction which arrives from the second region 14b of the second chamber 14 enters into said channel 19 and exits, via the second passage section 16, into the interstitial passage P before flowing out into the cavity I, passing through the main passage section 17. This fluid fraction which enters into the second chamber 14 flows hydraulically in parallel with the fluid fraction which crosses the pressure-reducing means 18a, 18b.

With particular reference to Figures 4-10, these show by way of example further embodiments of the present invention provided in accordance with the non-limiting description below.

Below, principally, but not exclusively, the differences with respect to the embodiments described above are illustrated. Moreover, in the continuation of the description the same reference numbers are used to indicate structural elements corresponding to those described hitherto.

Generally speaking, a cartridge member 210 for a salts dosing apparatus 100 for a hydraulic system, for example such as that shown in Figures 4-10, comprises:
- a connection member 20 which has at least one first connector 21 and at least one second connector 22 and a coupling collar 23 which is in fluid communication either with said at least one first connector 21 or with said at least one second connector 22;
- a container member 30 which can be coupled with said connection member 20 so as to delimit, together therewith, an internal compartment V into which said coupling collar 23 faces.

The cartridge member 210 comprises:
- a tubular external wall 11 which delimits inside it an operating chamber 211a and which extends from its top end 211b which is configured to be coupled with said coupling collar 23 in order to place said operating chamber 211a in fluid communication with said coupling collar 23; said external wall 11 being configured to be contained inside the internal compartment V of the dosing apparatus 100 and to define, together with the container member 30, a cavity I outside said external wall 11;
- a separation wall 12 connected to said external wall 11 so as to divide said operating chamber 211a into a first chamber 13 and a second chamber 14 where said second chamber 14 is configured to contain salts to be dosed or open out in a containment portion, of said internal compartment, designed to contain salts to be dosed, where said second chamber 14 has at least one first passage section 15 which places said first chamber 13 in fluid communication with said second chamber 14.

The external wall 11 has a main passage section 17 which can be crossed by a liquid, the main passage section 17 placing said first chamber 13 in fluid communication with said cavity I.

The cartridge member 210 has at least one second passage section 16 defined in said separation wall 12 so as to place said second chamber 14 in fluid communication with said first chamber 13. The cartridge member 210 comprises pressure-reducing means 110 designed to induce a pressure drop in a liquid which crosses them. The pressure-reducing means 110 are located inside first chamber 13, between said first passage section 15 and said second passage section 16 so as to cause a pressure difference in a liquid which crosses the dosing apparatus 100 during operation, along said first passage section 15 and said second passage section 16 and, consequently generate a flowrate of said liquid which crosses said second chamber 14 where said flowrate is proportional to a total liquid quantity which crosses the dosing apparatus 100 during operation.

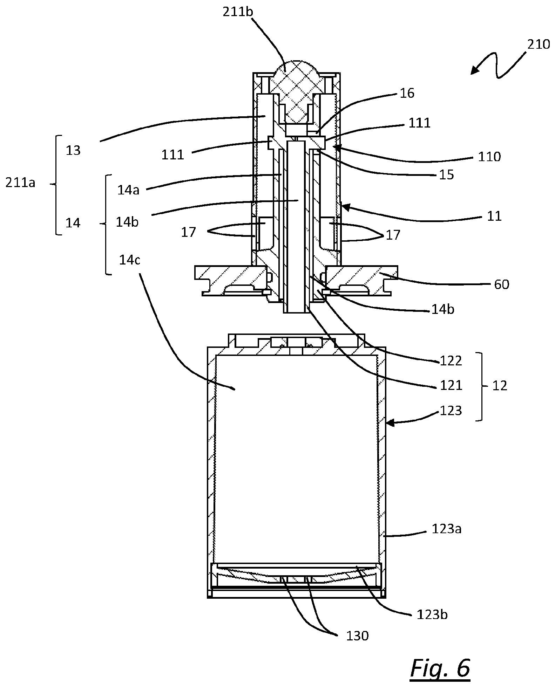

In detail, with particular reference to Figure 6, the cartridge member 210 comprises an external wall 11, which is preferably tubular and which delimits inside it an operating chamber 211a.

The external wall 11 is configured to be coupled with the coupling collar 23 so as to place the operating chamber 211a in fluid communication with the coupling collar 23 and consequently with the first connector 21.

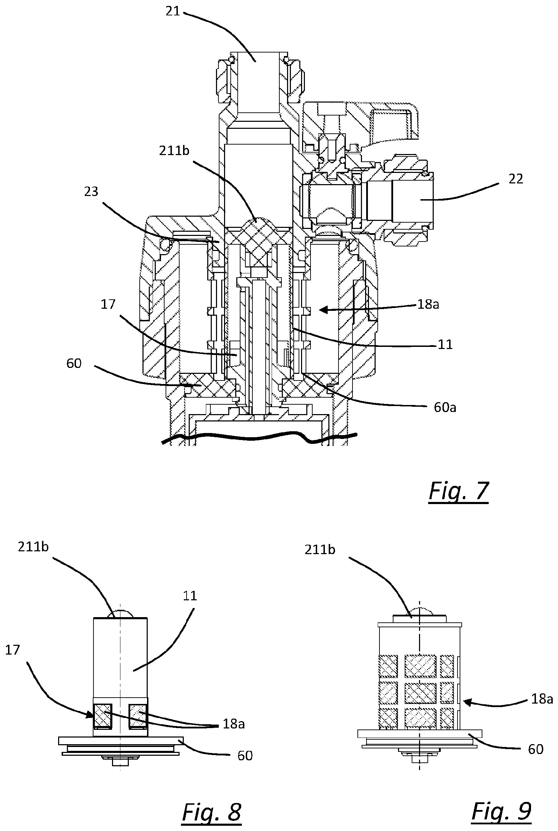

With particular reference to Figures 8 or 7 and 9, the filter may be incorporated in the main passage section 17, for example as shown in Figure 8, or may form a separate, for example cylindrical, element which surrounds and/or lines the main passage section 17, or the external wall 11, for example as shown in Figures 7 and 9.

In particular, the filter 18a may be fixed to the coupling collar 23, so as to be fixed to the connection member 20 for example by means of a form-fit with respect to an outer surface of the coupling collar 23, where the top end 211b of the external wall 11 may be coupled with an inner surface of said coupling collar.

The filter 18a may also be fixed to the separation partition 60 for coupling with the cartridge member 100, for example by means of a form-fit with an annular recess 60a around the external wall 11, which may be formed in the separation partition 60.

Preferably, this filter 18a is a mesh filter. preferably metal filter, which is situated along the main passage section(s) 17.

In particular, the external wall 11 may be mainly cylindrical and the main passage section 17 may be formed through a portion of the external wall 11 which is distal with respect to the top end 221b and which may have a plurality of openings which extend circumferentially around the external wall 11 and opposite which the filter 18 may be arranged.

Depending on the particular implementation requirements of the present invention, the number, size and position of the openings in the main passage section 17 may vary.

For example, for lower liquid flowrates, it is possible to provide a main passage section 17 which has a series of openings which extend circumferentially around the external wall 11, while, for higher flowrates, it is possible to provide a main passage section 17 which has a plurality of series of openings which extend circumferentially around the external wall 11.

The separation wall 12 may comprise two partitions 121 and 122 which may be tubular and located one inside the other, so as to define a first region 214a and a second region 214b of the second chamber 14 where the first region 214a may extend around the second region 214b, which may be divided by the first partition 121.

The second partition 122 may delimit externally the first region 214a of the second chamber 14 which is internally delimited by the first partition 121 which surrounds the second region 214b.

The first partition 121 and the second partition 122 form part of the separation wall 12.

In other words, the first region 214a of the second chamber 14 may consist of a cavity delimited on the inside by the first partition 121 and on the outside by the second partition 122.

The second chamber 14 may be configured to contain, in a region thereof, salts to be dosed and released into the system.

For example, the second chamber 14 may comprise a containment region 14c adapted to contain salts to be dosed and placed in sequential fluid communication with the first region 214a and the second region 214b of the second chamber 14.

In other words, functionally speaking, the first region 214a and the second region 214b of the second chamber 14 may be spaced and separated by the containment region 14c so that a fluid which moves across the second chamber 14, from the first region 214a to the second region 214b, or vice versa, necessarily crosses the containment region 14c and thus passes over the salts to be distributed in the said fluid.

The separation wall 12 may therefore be configured so as to form also a containment portion 123 which delimits the containment region 14c and which may be shaped in the manner of a cylindrical container as for example shown in the attached Figures 4-7.

The containment portion 123 may be fixed to the partitions 121 and 122 and separated from them, for example in order to house therein salts to be dosed.

In this respect, the containment portion may comprise a cup-shaped element 123a and a lid 123b for closing the cup-shaped element 123a, for example as can be seen in Figure 6.

It can be understood, therefore, how in the present document the term "wall" must be understood as meaning a structure which is suitable for separating from each other at least two environments, so as to guide a liquid to cross them, and which may consist of a single body or at least separate parts which can be joined together and separated from each other.

The cartridge member 210 may comprise a separation partition 60 designed to be coupled with the connection member 22 and/or with the container member 30, for example as shown in the attached Figures 4-10, in order to divide up the internal compartment into two portions which are hydraulically placed in communication by the cartridge member 210.

In particular, the separation partition 60 is suitable for separating the cavity I from a bottom portion V1 of the internal compartment V which may be delimited by the container member 30, at the bottom, and by the cartridge member 210, at the top, when it is coupled to the container member 30.

The separation partition 60 is configured to prevent liquid from passing directly between the cavity I and the bottom portion V1 of the internal compartment V.

It may extend radially from the external wall as far as an inner face of the container member 30.

The containment portion 123 may be configured so that it can be housed inside the bottom portion V1 so as to separate the containment region 14c, containing it and defining between it and the container member 30 an operating interstice lo which is in fluid communication with the first region 214a of the second chamber 14 and with the second region 214b via the containment region 14c with which it is in fluid communication, for example by means of through-holes 130 which pass through the containment portion 123 and which are preferably formed in the lid 123b and/or in any case in a part of the containment portion 123 which is distal with respect to the second region 214b so that a liquid which enters into the containment region 14c via the through-holes 130, or from the second region 214b, in order to reach the second region 214b, or the through-holes 130, respectively, must cross the containment region 14c in order to pass over the salts to be dosed, which may be provided inside it.

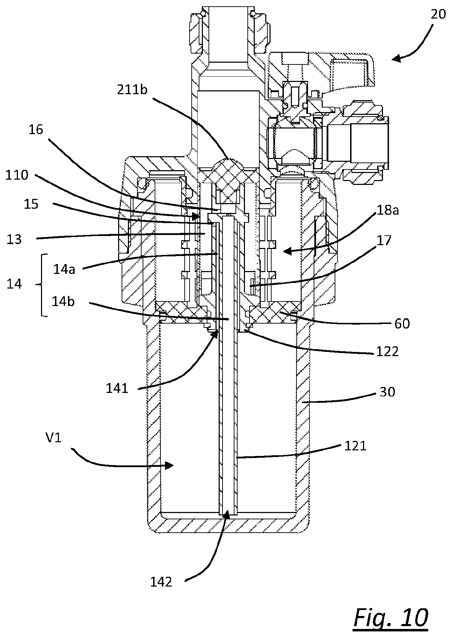

In a variant shown in Figure 10, the second chamber 14 may be without the containment region 14c and have, instead, the first region 214a and the second region 214b configured to be both open on the bottom portion V1 of the internal compartment V, where salts to be dosed can be housed.

In other words, according to this variant, the salts to be dosed are intended to be contained directly inside the container member 30 instead of inside the cartridge member 210 which in turn could be partially contained inside the container member.

The cartridge member 210 may therefore be configured so that the second chamber has two through-openings 141 and 142 in the second chamber which are arranged mutually spaced so that a liquid which exits from one of them, directed towards the other, passes over the salts to be dosed, which are housed inside the container member 30.

For example, the first region 214a of the second chamber 14 may have a first through-opening 141 and the second chamber 14c may have a second through-opening 142 positioned so as to open out in the bottom portion V1 of the internal compartment V when the cartridge member 210 is incorporated in the dosing apparatus 100.

The cartridge member 210 may be configured so that the first and second through-openings 141 and 142 are located in the proximity respectively of two opposite end portions of the bottom portion V1 of the internal compartment V so that a liquid which enters through one of them into the bottom portion V1 must pass through the latter in order to exit from the other opening, thus passing over the salts situated inside the said bottom portion V1.

For example, the first partition 121 may extend through the separation partition 60 so as to project, with respect to the latter, towards one end of the bottom portion V1 where at the opposite end the said separation partition 60 is present. In this case, the first partition 121 may be tubular and have an open end which defines the first through-opening 141, while the second through-opening 142 may be defined by the second partition 122 in the proximity of the separation partition 60, for example, the second through-opening 142 may extend annularly around the first partition 121 along the section of the latter from which it extends so as to project with respect to the separation partition 60.

The first passage section 15 may be defined by at least one hole or opening passing through the second partition 122.

The cartridge member 210 has furthermore a second passage section 16 provided for placing the second chamber 14 and in particular the second region 214b of the second chamber 14 in fluid communication with the first chamber 13.

The cartridge member 210 also comprises pressure-reducing means 110 which are configured to induce a pressure drop in the liquid which crosses them. These pressure-reducing means 110 are located in the first chamber 13 between the first passage section 15 and the second passage section 16 so that a liquid which moves inside the first chamber 13 between the first passage section 15 and the second passage section 16 undergoes a drop in pressure. The pressure-reducing means 110 may comprise a filter configured to retain particles conveyed by a liquid which crosses it.

In combination or alternatively, the pressure-reducing means 110 may define a restriction section A of the first chamber 13, for example defined by a protuberance 11 projecting inside the first chamber 13 from at least one of the external wall 11 and the separation wall 12.

In particular, therefore, the first passage section 15 and the second passage section 16 both place in fluid communication the first chamber 13 and the second chamber 14 of the cartridge member 210, defining an inlet and an outlet for a liquid.

Along an interstitial passage defined between the external wall 11 and the separation wall 12, in the direction from the main passage section 17, the following are present in succession: the first passage section 15, the restriction section A and the second passage section 16.

In particular, the protuberance 111 may project from the second partition 122 inside the first chamber 13 towards the external wall 11. The protuberance 111 may therefore consist of an annular shoulder which projects from the outer cylindrical face of the second partition 122, towards the external wall 11, and/or from the inner cylindrical face of the wall 11 towards the second partition 122.

In other words, the protuberance 111 has the function of causing a restriction of the interstitial passage defined by the external wall 11 and the separation wall 12, and especially between the external wall 11, which is preferably cylindrical, and the second partition 122, which is preferably cylindrical.

The first passage section 15 and the second passage section 16 may be provided in the immediate vicinity, for example at a distance of between 1 and 5 mm, of the pressure-reducing means 110, for example on the opposite sides of the protuberance 111, for example as shown in the attached Figures 4-10, such that the first passage section 15 is located directly upstream or downstream, depending on the direction of outflow, of the pressure-reducing means 110, and the second passage section 16 is located directly downstream or upstream, respectively, of the pressure-reducing means 110. Thus following the passage of liquid through the first chamber 13, in the region of the pressure-reducing means 110, the pressure of the liquid along the first passage section 15 is different from that along the second passage section 16 such that the difference in pressure between the first passage section 15 and the second passage section 16 causes a deviation of the liquid flow from one to the other, across the second chamber 14, so that the liquid passes over the salts to be dosed. This deviation flow is obviously proportional to the difference in pressure between the first passage section 15 and the second passage section 16 which, in turn, is directly proportional to the main liquid flow which crosses the first chamber 13 in the region of the pressure-reducing means 110, where the main flow is the flow which bypasses the second chamber 14 being conveyed by the cartridge member 210 directly from the first connector 21 to the second connector 22, or vice versa, depending on the assembly configuration of the dosing device 100 in the system which must be used and the consequent direction of outflow of the liquid through the dosing apparatus 100.

The separation wall 12 may comprise a channel 19 in fluid communication with the second passage section 16. This channel 19 further comprises a mouth opening out into the second region 214b of the second chamber 14.

The channel 19 may be configured to cause a reduction in pressure of a liquid which crosses it, for example forming or comprising a restriction. Consequently, therefore, a fluid entering into the cartridge member 210 at the top end 211b of the external wall 11 enters into the first chamber 13 and flows into the interstitial passage defined between the external wall 11 and the separation wall 12, before encountering the pressure-reducing means 110. The latter generate a pressure difference in the fluid which crosses them. Consequently, this causes the entry of a fluid fraction which flows into the interstitial passage inside the second chamber 14, in particular in the second region 214b of the first chamber 14, via the second passage section 16 and the channel 19. This fluid fraction flows parallel to the fluid fraction who crosses the pressure-reducing means 110 until it reaches the salts to be dosed, inside the containment section 14c of the first chamber 14 or in the bottom portion V1 of the internal compartment V and then flows back up through the first region 214a of the second chamber 14. At this point, the fluid fraction which arrives from the first region 214b of the second chamber 14 exits, via the first passage section 16, into the interstitial passage P before passing into the cavity I through the main passage section 17 and finally exiting via the second connector 22. This fluid fraction which enters into the second chamber 14 flows hydraulically in parallel with the fluid fraction which crosses the pressure-reducing means 110.

Figure 5 shows the dosing apparatus 100 according to Fig. 4 without the corresponding references in order to facilitate the illustration of the flow path of a liquid which is opposite to that described hitherto, i.e. which enters from the second connector 22 and exits via the first connector 21 of the dosing apparatus.

This flow path is illustrated by means of grey-coloured arrows which are visible in Figure 5.

It can therefore be seen how the present invention is able to achieve the predefined task and objects, being able to obtain, in particular, the precise dosing also of polyphosphate elements with an irregular shape which are provided inside the second chamber of the cartridge member or in the bottom portion V1 of the internal compartment V. In particular, moreover, it is able to obtain the precise dosing also of polyphosphate elements with an irregular shape which are provided inside the second chamber of the cartridge member.

The invention thus devised may be subject to numerous modifications and variations, all of which fall within the scope of protection of the attached claims.

Moreover, all the details may be replaced by other technically equivalent elements. Where the operational characteristics and the techniques mentioned in the following claims are followed by reference numbers or symbols, these reference numbers or symbols have been assigned with the sole purpose of facilitating understanding of the said claims and consequently they do not limit in any way the interpretation of each element which is identified, purely by way of example, by said reference numbers or symbols.

## Claims

1. A salts dosing apparatus (100) for a hydraulic system; wherein said dosing apparatus (100) comprises:
- a connection member (20) which has at least one first connector (21) and at least one second connector (22) and a coupling collar (23) which is in fluid communication either with said at least one first connector (21) or with said at least one second connector (22);
- a container member (30) which can be coupled with said connection member (20) so as to define, together with the latter, an internal compartment (V) into which said coupling collar (23) faces;
- a cartridge member (10) comprising:
- a tubular external wall (11) which delimits inside it an operating chamber (11c) and extends from a connection portion (11a) thereof which is configured to engage with said coupling collar (23) so as to place said operating chamber (11c) in fluid communication with said coupling collar (23); said external wall (11) being configured to be contained inside the internal compartment (V) of the dosing apparatus (100) and to define, together with the container member (30), a cavity (I) outside said external wall (11); said container member (30) being configured so that said second connector (22) is in fluid communication with said internal compartment (V) and with said cavity (I);
- a separation wall (12) connected to said external wall (11) so as to divide said operating chamber (11c) into a first chamber (13) and a second chamber (14) wherein said second chamber (14) is configured to contain salts to be dosed or to face a containment portion of said internal compartment (V), adapted to contain salts to be dosed, wherein said second chamber (14) has at least one first passage section (15) which places said first chamber (13) in fluid communication with said second chamber (14);
wherein said external wall (11) has a main passage section (17) which can be crossed by a liquid; said main passage section (17) placing said first chamber (13) in fluid communication with said cavity (I);
wherein said cartridge member (10) has at least one second passage section (16) alternatively provided in said separation wall (12) so as to place said second chamber (14) in fluid communication with said first chamber (13) or in said external wall (11) so as to place said second chamber (14) in fluid communication with the cavity (I);
said cartridge member (10) comprising pressure-reducing means (18a, 18b, 110) adapted to induce a pressure drop in a liquid passing through them;
said pressure-reducing means (18a, 18b, 110) are located either in said main passage section (17) if said second passage section (16) connects said second chamber (14) with the outside of said external wall (11), or in said first chamber (13), between said first passage section (15) and said second passage section (16), if said second passage section (16) connects said first chamber (13) with said second chamber (14),
wherein said pressure-reducing means (18a, 18b, 110) comprise a restriction section (18b, A) which has at least one protuberance (12a, 111) which projects:
- either from said external wall (11) towards the outside of said external wall (11) to form a restriction in the cavity (I) which said cartridge member (10) forms with said container member (30) when it is incorporated in the dosing apparatus (100), if said second passage section (16) connects said second chamber (14) with said cavity (I),
- or from said separation wall (12) towards said external wall (11) and/or from said external wall (11) towards said separation wall (12), so as to cause a restriction in an interstitial passage (P) which is defined between said external wall (11) and said separation wall (12).

2. Salts dosing apparatus (100) according to claim 1, wherein along said interstitial passage (P), between said connection portion (11a) and said main passage section (17), the following are present in succession: said first passage section (15), said restriction section (18b) and said second passage section (16), or said second passage section (16), said constriction section (A) and said first passage section (15).

3. Salts dosing apparatus (100) according to one of claims 1 and 2, wherein said separation wall (12) has a tubular portion which extends between the connection portion (11a) or said top end (211b) and the main passage section (17) of said external wall (11).

4. Salts dosing apparatus (100) according to one of claims 2 and 3, wherein said first passage section (15) opens out in a first region (14a, 214a) of said second chamber (14) and said separation wall (12) comprises a channel (19) which is in fluid communication with said second passage section (16) and which has a mouth opening out into a second region (14b, 214b) of said second chamber (14) wherein said first region (14a, 214a) of said second chamber (14) and said second region (14b, 214b) of said second chamber (14) are spaced apart and separated by a containment region (14c) adapted to contain salts to be dosed.

5. Salts dosing apparatus (100) according to claim 1, wherein said external wall (11) has an end portion (11d) which is distal with respect to said connection portion (11a) so as to face a bottom of the container member (30) when said cartridge member (10) and the container member (30) are coupled to said connection member (20); said second passage section (16) being located inside said end portion (11d).

6. Salts dosing apparatus (100) according to the preceding claim, wherein along a development direction (L) of said external wall (11) which extends from said connection portion (11a) to said end portion (11d), said cartridge member (10) has in succession:
- said first chamber (13) with said main passage section (17),
- said separation wall (12);
- said second chamber (14);
wherein said pressure-reducing means (18a, 18b) engage said main passage section (17).

7. Salts dosing apparatus (100) according to the preceding claim, wherein said separation wall (12) extends transversely with respect to said development direction (L).

8. Salts dosing apparatus (100) according to one of the preceding claims which comprises a filter (18) which engages said main passage section (17) so as to retain particles conveyed by a liquid passing through said section (17).

9. Salts dosing apparatus (100) according to one of the preceding claims,
wherein said external wall (11) is mainly cylindrical and said main passage section (17) may have a plurality of openings which extend circumferentially with respect to said external wall (11).

10. Salts dosing apparatus (100) according to one of the preceding claims, wherein said container member (30) has a substantially conical or cylindrical development and the external wall (11) of said cartridge member (10) according to claim 10 is coaxial with said container member (30) so as to define, together with said container member (30), an annular cavity (I) around said external wall (11).

11. Salts dosing apparatus (100) according to any of the preceding claims, wherein said coupling collar (23) and said connection portion (11a) are configured to be coupled together in a leak-tight form-fitting manner; at least one gasket (11b) can be arranged between said coupling collar (23) and said connection portion (11a).

## Patentansprüche

1. Salzdosiervorrichtung (100) für ein Hydrauliksystem; wobei die Dosiervorrichtung (100) umfasst:
- ein Verbindungselement (20), das mindestens einen ersten Verbinder (21) und mindestens einen zweiten Verbinder (22) und einen Kopplungskragen (23) aufweist, der entweder mit dem mindestens einen ersten Verbinder (21) oder mit dem mindestens einen zweiten Verbinder (22) in Fluidverbindung steht;
- ein Behälterelement (30), das mit dem Verbindungselement (20) gekoppelt werden kann, um zusammen mit letzterem ein internes Abteil (V) zu definieren, dem der Kopplungskragen (23) zugewandt ist;
- ein Patronenelement (10), umfassend:
- eine röhrenförmige externe Wand (11), die in ihrem Inneren eine Betriebskammer (11c) begrenzt und sich von einem Verbindungsabschnitt (11a) davon erstreckt, der konfiguriert ist, um den Kopplungskragen (23) in Eingriff zu nehmen, um die Betriebskammer (11c) in Fluidverbindung mit dem Kopplungskragen (23) zu bringen; wobei die externe Wand (11) konfiguriert ist, um in dem Inneren des internen Abteils (V) der Dosiervorrichtung (100) enthalten zu sein und zusammen mit dem Behälterelement (30) einen Hohlraum (I) außerhalb der externen Wand (11) zu definieren; wobei das Behälterelement (30) konfiguriert ist, sodass der zweite Verbinder (22) in Fluidverbindung mit dem internen Abteil (V) und mit dem Hohlraum (I) steht;
- eine Trennwand (12), die mit der externen Wand (11) verbunden ist, um die Betriebskammer (11c) in eine erste Kammer (13) und eine zweite Kammer (14) zu unterteilen, wobei die zweite Kammer (14) konfiguriert ist, um zu dosierende Salze zu enthalten oder einem Enthaltungsabschnitt des internen Abteils (V) zugewandt zu sein, der angepasst ist, um zu dosierende Salze zu enthalten, wobei die zweite Kammer (14) mindestens einen ersten Durchgangsbereich (15) aufweist, der die erste Kammer (13) in Fluidverbindung mit der zweiten Kammer (14) bringt;
wobei die externe Wand (11) einen Hauptdurchgangsbereich (17) aufweist, der von einer Flüssigkeit durchquert werden kann; wobei der Hauptdurchgangsbereich (17) die erste Kammer (13) in Fluidverbindung mit dem Hohlraum (I) bringt;
wobei das Patronenelement (10) mindestens einen zweiten Durchgangsbereich (16) aufweist, der alternativ in der Trennwand (12), um die zweite Kammer (14) in Fluidverbindung mit der ersten Kammer (13) zu bringen, oder in der externen Wand (11) bereitgestellt ist, um die zweite Kammer (14) in Fluidverbindung mit dem Hohlraum (I) zu bringen;
das Patronenelement (10) umfassend druckreduzierende Mittel (18a, 18b, 110), die angepasst sind, um einen Druckabfall in einer Flüssigkeit herbeizuführen, die durch sie hindurch passiert;
wobei sich die druckreduzierenden Mittel (18a, 18b, 110) entweder in dem Hauptdurchgangsbereich (17) befinden, falls der zweite Durchgangsbereich (16) die zweite Kammer (14) mit der Außenseite der externen Wand (11) verbindet, oder in der ersten Kammer (13), zwischen dem ersten Durchgangsbereich (15) und dem zweiten Durchgangsbereich (16), falls der zweite Durchgangsbereich (16) die erste Kammer (13) mit der zweiten Kammer (14) verbindet,
wobei die druckreduzierenden Mittel (18a, 18b, 110) einen Einschränkungsbereich (18b, A) umfassen, der mindestens einen Vorsprung (12a, 111) aufweist, der vorsteht:
- entweder von der externen Wand (11) nach außen von der externen Wand (11), um eine Einschränkung in dem Hohlraum (I) auszubilden, den das Patronenelement (10) mit dem Behälterelement (30) ausbildet, wenn es in die Dosiervorrichtung (100) eingebaut ist, falls der zweite Durchgangsbereich (16) die zweite Kammer (14) mit dem Hohlraum (I) verbindet,
- oder von der Trennwand (12) zu der externen Wand (11) und/oder von der externen Wand (11) zu der Trennwand (12), um eine Einschränkung in einem Zwischendurchgang (P) zu bewirken, der zwischen der externen Wand (11) und der Trennwand (12) definiert ist.

2. Salzdosiervorrichtung (100) nach Anspruch 1, wobei entlang des Zwischendurchgangs (P), zwischen dem Verbindungsabschnitt (11a) und dem Hauptdurchgangsbereich (17), nacheinander Folgendes vorhanden ist: der erste Durchgangsbereich (15), der Einschränkungsbereich (18b) und der zweite Durchgangsbereich (16), oder der zweite Durchgangsbereich (16), der Einschränkungsbereich (A) und der erste Durchgangsbereich (15).

3. Salzdosiervorrichtung (100) nach einem der Ansprüche 1 und 2, wobei die Trennwand (12) einen rohrförmigen Abschnitt aufweist, der sich zwischen dem Verbindungsabschnitt (11a) oder dem oberen Ende (211b) und dem Hauptdurchgangsbereich (17) der externen Wand (11) erstreckt.

4. Salzdosiervorrichtung (100) nach einem der Ansprüche 2 und 3, wobei sich der erste Durchgangsbereich (15) in eine erste Region (14a, 214a) der zweiten Kammer (14) öffnet und die Trennwand (12) einen Kanal (19) umfasst, der in Fluidverbindung mit dem zweiten Durchgangsbereich (16) steht und der eine Mündung aufweist, die sich in eine zweite Region (14b, 214b) der zweiten Kammer (14) öffnet, wobei die erste Region (14a, 214a) der zweiten Kammer (14) und die zweite Region (14b, 214b) der zweiten Kammer (14) beabstandet und durch eine Eindämmungsregion (14c) getrennt sind, die angepasst ist, um zu dosierende Salze zu enthalten.

5. Salzdosiervorrichtung (100) nach Anspruch 1, wobei die externe Wand (11) einen Endabschnitt (11d) aufweist, der distal bezüglich des Verbindungsabschnitts (11a) ist, um einem Boden des Behälterelements (30) zugewandt zu sein, wenn das Patronenelement (10) und das Behälterelement (30) an das Verbindungselement (20) gekoppelt sind; wobei sich der zweite Durchgangsbereich (16) innerhalb des Endabschnitts (11d) befindet.

6. Salzdosiervorrichtung (100) nach dem vorstehenden Anspruch, wobei entlang einer Entwicklungsrichtung (L) der externen Wand (11), die sich von dem Verbindungsabschnitt (11a) zu dem Endabschnitt (11d) erstreckt, das Patronenelement (10) nacheinander aufweist:
- die erste Kammer (13) mit dem Hauptdurchgangsbereich (17),
- die Trennwand (12);
- die zweite Kammer (14);
wobei die druckreduzierenden Mittel (18a, 18b) mit dem Hauptdurchgangsbereich (17) in Eingriff stehen.

7. Salzdosiervorrichtung (100) nach dem vorstehenden Anspruch, wobei sich die Trennwand (12) bezüglich der Entwicklungsrichtung (L) quer erstreckt.

8. Salzdosiervorrichtung (100) nach einem der vorstehenden Ansprüche, die einen Filter (18) umfasst, der mit dem Hauptdurchgangsbereich (17) in Eingriff steht, um Partikel zurückzuhalten, die durch eine Flüssigkeit gefördert werden, die durch den Bereich (17) hindurch passiert.

9. Salzdosiervorrichtung (100) nach einem der vorstehenden Ansprüche, wobei die externe Wand (11) hauptsächlich zylindrisch ist und der Hauptdurchgangsbereich (17) eine Vielzahl von Öffnungen aufweisen kann, die sich umlaufend bezüglich der externen Wand (11) erstrecken.

10. Salzdosiervorrichtung (100) nach einem der vorstehenden Ansprüche, wobei das Behälterelement (30) eine im Wesentlichen konische oder zylindrische Entwicklung aufweist und die externe Wand (11) des Patronenelements (10) nach Anspruch 10 koaxial zu dem Behälterelement (30) ist, um zusammen mit dem Behälterelement (30) einen ringförmigen Hohlraum (I) um die externe Wand (11) herum zu definieren.

11. Salzdosiervorrichtung (100) nach einem der vorstehenden Ansprüche, wobei der Kopplungskragen (23) und der Verbindungsabschnitt (11a) konfiguriert sind, um in einer dichten formschlüssigen Weise miteinander gekoppelt zu werden; wobei mindestens eine Dichtung (11b) zwischen dem Kopplungskragen (23) und dem Verbindungsabschnitt (11a) angeordnet sein kann.

## Revendications

1. Appareil de dosage de sels (100) pour un système hydraulique ; dans lequel ledit appareil de dosage (100) comprend :
- un élément de raccordement (20) qui a au moins un premier raccord (21) et au moins un second raccord (22) et un collier d'accouplement (23) qui est en communication fluidique soit avec ledit au moins un premier raccord (21), soit avec ledit au moins un second raccord (22) ;
- un élément formant récipient (30) qui peut être accouplé audit élément de raccordement (20) de manière à définir, conjointement avec ce dernier, un compartiment intérieur (V) auquel ledit collier d'accouplement (23) fait face ;
- un élément formant cartouche (10) comprenant :
- une paroi externe tubulaire (11) qui délimite à l'intérieur de celle-ci une chambre de travail (11c) et s'étend à partir d'une partie de raccordement (11a) de celle-ci qui est conçue pour venir en prise avec ledit collier d'accouplement (23) de manière à placer ladite chambre de travail (11c) en communication fluidique avec ledit collier d'accouplement (23) ; ladite paroi externe (11) étant conçue pour être contenue à l'intérieur du compartiment interne (V) de l'appareil de dosage (100) et pour définir, conjointement avec l'élément formant récipient (30), une cavité (I) à l'extérieur de ladite paroi externe (11) ; ledit élément formant récipient (30) étant conçu de sorte que ledit second raccord (22) est en communication fluidique avec ledit compartiment interne (V) et avec ladite cavité (I) ;
- une paroi de séparation (12) reliée à ladite paroi externe (11) de manière à diviser ladite chambre de travail (11c) en une première chambre (13) et une seconde chambre (14), dans lequel ladite seconde chambre (14) est conçue pour contenir des sels à doser ou pour faire face à une partie de confinement dudit compartiment interne (V), adaptée pour contenir des sels à doser, dans lequel ladite seconde chambre (14) a au moins une première section de passage (15) qui place ladite première chambre (13) en communication fluidique avec ladite seconde chambre (14) ;
dans lequel ladite paroi externe (11) a une section de passage principal (17) qui peut être traversée par un liquide ; ladite section de passage principal (17) plaçant ladite première chambre (13) en communication fluidique avec ladite cavité (I) ;
dans lequel ledit élément formant cartouche (10) a au moins une seconde section de passage (16) alternativement disposée dans ladite paroi de séparation (12) de manière à placer ladite seconde chambre (14) en communication fluidique avec ladite première chambre (13) ou dans ladite paroi externe (11) de manière à placer ladite seconde chambre (14) en communication fluidique avec la cavité (I) ;
ledit élément formant cartouche (10) comprenant des moyens de réduction de pression (18a, 18b, 110) conçus pour induire une chute de pression dans un liquide les traversant ;
lesdits moyens de réduction de pression (18a, 18b, 110) sont situés soit dans ladite section de passage principal (17) si ladite seconde section de passage (16) raccorde ladite seconde chambre (14) à l'extérieur de ladite paroi externe (11), soit dans ladite première chambre (13), entre ladite première section de passage (15) et ladite seconde section de passage (16), si ladite seconde section de passage (16) raccorde ladite première chambre (13) à ladite seconde chambre (14),
dans lequel lesdits moyens de réduction de pression (18a, 18b, 110) comprennent une section de restriction (18b, A) qui a au moins une saillie (12a, 111) qui fait saillie :
- soit de ladite paroi externe (11) vers l'extérieur de ladite paroi externe (11) afin de former une restriction dans la cavité (I) que ledit élément formant cartouche (10) forme avec ledit élément formant récipient (30) lorsqu'il est incorporé dans l'appareil de dosage (100), si ladite seconde section de passage (16) raccorde ladite seconde chambre (14) à ladite cavité (I),
- soit de ladite paroi de séparation (12) vers ladite paroi externe (11) et/ou de ladite paroi externe (11) vers ladite paroi de séparation (12), de manière à provoquer une restriction dans un passage interstitiel (P) qui est défini entre ladite paroi externe (11) et ladite paroi de séparation (12).

2. Appareil de dosage de sels (100) selon la revendication 1, dans lequel le long dudit passage interstitiel (P), entre ladite partie de raccordement (11a) et ladite section de passage principal (17), les éléments suivants sont présents successivement : ladite première section de passage (15), ladite section de restriction (18b) et ladite seconde section de passage (16), ou ladite seconde section de passage (16), ladite section d'étranglement (A) et ladite première section de passage (15).

3. Appareil de dosage de sels (100) selon l'une des revendications 1 et 2, dans lequel ladite paroi de séparation (12) a une partie tubulaire qui s'étend entre la partie de raccordement (11a) ou ladite extrémité supérieure (211b) et la section de passage principal (17) de ladite paroi externe (11).

4. Appareil de dosage de sels (100) selon l'une des revendications 2 et 3, dans lequel ladite première section de passage (15) débouche dans une première région (14a, 214a) de ladite seconde chambre (14) et ladite paroi de séparation (12) comprend un canal (19) qui est en communication fluidique avec ladite seconde section de passage (16) et qui a une embouchure débouchant dans une seconde région (14b, 214b) de ladite seconde chambre (14), dans lequel ladite première région (14a, 214a) de ladite seconde chambre (14) et ladite seconde région (14b, 214b) de ladite seconde chambre (14) sont espacées et séparées par une région de confinement (14c) adaptée pour contenir des sels à doser.

5. Appareil de dosage de sels (100) selon la revendication 1, dans lequel ladite paroi externe (11) a une partie d'extrémité (11d) qui est distale par rapport à ladite partie de raccordement (11a) de façon à faire face à un fond de l'élément formant récipient (30) lorsque ledit élément formant cartouche (10) et l'élément formant récipient (30) sont accouplés audit élément de raccordement (20) ; ladite seconde section de passage (16) étant située à l'intérieur de ladite partie d'extrémité (11d).

6. Appareil de dosage de sels (100) selon la revendication précédente, dans lequel, le long d'une direction de développement (L) de ladite paroi externe (11) qui s'étend de ladite partie de raccordement (11a) à ladite partie d'extrémité (11d), ledit élément formant cartouche (10) a successivement :
- ladite première chambre (13) avec ladite section de passage principal (17),
- ladite paroi de séparation (12) ;
- ladite seconde chambre (14) ;
dans lequel lesdits moyens de réduction de pression (18a, 18b) viennent en prise avec ladite section de passage principal (17).

7. Appareil de dosage de sels (100) selon la revendication précédente, dans lequel ladite paroi de séparation (12) s'étend transversalement par rapport à ladite direction de développement (L).

8. Appareil de dosage de sels (100) selon l'une des revendications précédentes, qui comprend un filtre (18) qui vient en prise avec ladite section de passage principal (17) de manière à retenir des particules transportées par un liquide traversant ladite section (17).

9. Appareil de dosage de sels (100) selon l'une des revendications précédentes, dans lequel ladite paroi externe (11) est principalement cylindrique et ladite section de passage principal (17) peut avoir une pluralité d'ouvertures qui s'étendent circonférentiellement par rapport à ladite paroi externe (11).

10. Appareil de dosage de sels (100) selon l'une des revendications précédentes, dans lequel ledit élément formant récipient (30) a un développement sensiblement conique ou cylindrique et la paroi externe (11) dudit élément formant cartouche (10) selon la revendication 10 est coaxiale avec ledit élément formant récipient (30) de manière à définir, conjointement avec ledit élément formant récipient (30), une cavité annulaire (I) autour de ladite paroi externe (11).

11. Appareil de dosage de sels (100) selon l'une quelconque des revendications précédentes, dans lequel ledit collier d'accouplement (23) et ladite partie de raccordement (11a) sont conçus pour être accouplés ensemble de manière étanche et ajustée ; au moins un joint (11b) peut être agencé entre ledit collier d'accouplement (23) et ladite partie de raccordement (11a).
